# EUROPEAN PATENT SPECIFICATION

(11) **EP 3 318 081 B1**
(45) Date of publication and mention of the grant of the patent: **15.02.2023**
(21) Application number: 16821607.5
(22) Date of filing: 04.07.2016
(51) Int. Cl.: H04W 28/02, H04W 84/12, H04W 92/04, H04L 12/14, H04M 15/00, H04W 4/24, H04W 28/08, H04W 36/00, H04W 36/14, H04W 36/22, H04W 36/38, H04W 84/04

(54) **METHOD AND APPARATUS FOR ENHANCING COORDINATION OF LTE-WLAN IN WIRELESS COMMUNICATION SYSTEM**
VERFAHREN UND VORRICHTUNG ZUR VERBESSERUNG DER KOORDINATION VON LTE-WLAN IN EINEM DRAHTLOSKOMMUNIKATIONSSYSTEM
PROCÉDÉ ET APPAREIL POUR AMÉLIORER LA COORDINATION D'UN LTE-WLAN DANS UN SYSTÈME DE COMMUNICATION SANS FIL

(30) Priority: 03.07.2015 US 201562188486 P
(43) Date of publication of application: 09.05.2018
(73) Proprietor: LG Electronics Inc., Yeongdeungpo-gu Seoul 07336 (KR)
(72) Inventor: XU, Jian, Seoul 06772 (KR); LEE, Jaewook, Seoul 06772 (KR); BYUN, Daewook, Seoul 06772 (KR)
(74) Representative: Frenkel, Matthias Alexander
(86) International application number: PCT/KR2016/007184
(87) International publication number: WO 2017/007201

(56) References cited:
- WO-A1-2014/000808
- WO-A1-2014/157898
- WO-A1-2014/158275
- WO-A1-2014/165832
- WO-A1-2014/175677
- WO-A1-2015/073130
- US-A1- 2012 030 143
- US-A1- 2012 030 143
- US-A1- 2014 082 697
- US-A1- 2014 211 626

## Description

### Technical Field

The present invention relates to wireless communications, and more particularly, to a method and apparatus for enhancing coordination of 3rd generation partnership project long-term evolution (3GPP LTE) and wireless local area network (WLAN) in a wireless communication system.

### Background Art

The 3GPP LTE is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Since Rel-8, 3GPP has standardized access network discovery and selection functions (ANDSF), which is for interworking between 3GPP access network and non-3GPP access network (e.g. wireless local area network (WLAN)). The ANDSF may carry detection information of access networks accessible in location of a user equipment (UE) (e.g., WLAN, WiMAX location information, etc.), inter-system mobility policies (ISMP) which is able to reflect operator's policies, and inter-system routing policy (ISRP). Based on the information described above, the UE may determine which Internet protocol (IP) traffic is transmitted through which access network. The ISMP may include network selection rules for the UE to select one active access network connection (e.g., WLAN or 3GPP). The ISRP may include network selection rules for the UE to select one or more potential active access network connection (e.g., both WLAN and 3GPP). The ISRP may include multiple access connectivity (MAPCON), IP flow mobility (IFOM) and non-seamless WLAN offloading. Open mobile alliance (OMA) device management (DM) may be used for dynamic provision between the ANDSF and the UE.

WLAN interworking and integration is currently supported by 3GPP specifications at the CN level, including both seamless and non-seamless mobility to WLAN. 3GPP have agreed to study potential RAN level enhancements for WLAN/3GPP interworking in Rel-12. Specifically, in addition to ANDSF, policy, i.e. radio access network (RAN) rule, has been specified in Rel-12 for interworking between 3GPP access network and non-3GPP access network (e.g. WLAN). By this policy, access network selection and traffic steering between LTE and WLAN can be supported.

Interworking between LTE and WLAN is moving in the direction of increasingly integrating LTE and WLAN. Accordingly, LTE-WLAN aggregation as well as LTE-WLAN interworking enhancements has been studied recently.

US 2014/082697 A1 discloses techniques for offloading traffic from a third generation partnership project (3GPP) access network to a non-3GPP access point (AP) are disclosed. A 3GPP access network entity may receive subscription information associated with a wireless transmit receive unit (WTRU). The 3GPP access network entity may further receive traffic associated with the WTRU. The 3GPP access network entity may further determine whether to offload the traffic to the non-3GPP AP based on the subscription information. The 3GPP access network entity may also forward the traffic to the non-3GPP AP based on its determination.

US 2012/030143 A1 discloses a method performed by a wireless node including receiving charging policies for data offloading; performing data offloading with respect to a user data flow; generating charging information associated with data offloading based on the charging policies; and sending the charging information to at least one of an on-line charging function or an off-line charging function.

WO 2014/165832 A1 discloses techniques for bearer management in a wireless network using virtual bearers, techniques for managing conflicts between an eNB decision to offload a wireless transmit/receive unit (WTRU) to a WLAN and an ANDSF policy, techniques for minimization of drive tests (MDT) for WLAN or during an offload to WLAN, and techniques for signaling capabilities of a WTRU.

### Disclosure of Invention

### Technical Problem

The present invention provides a method and apparatus for enhancing coordination of 3rd generation partnership project long-term evolution (3GPP LTE) and wireless local area network (WLAN) in a wireless communication system. The present invention provides a method and apparatus for assisting an eNodeB (eNB) to decide to offload bearers from LTE to WLAN or from WLAN to LTE.

### Solution to Problem

The present invention is defined by the appended independent claim, by which the protection scope is to be set.

### Advantageous Effects of Invention

3GPP/WLAN coordination can be enhanced.

### Brief Description of Drawings

FIG. 1 shows LTE system architecture.
FIG. 2 shows a block diagram of architecture of a typical E-UTRAN and a typical EPC.
FIG. 3 shows a block diagram of a user plane protocol stack of an LTE system.
FIG. 4 shows a block diagram of a control plane protocol stack of an LTE system.
FIG. 5 shows an example of a physical channel structure.
FIG. 6 shows an example of architecture for LTE/WLAN coordination.
FIG. 7 shows a method for transmitting an indication for LTE/WLAN coordination according to an embodiment of the present invention.
FIG. 8 shows a method for transmitting an indication for LTE/WLAN coordination according to another embodiment of the present invention.
FIG. 9 shows a method for transmitting an indication for LTE/WLAN coordination according to another embodiment of the present invention.
FIG. 10 shows a method for transmitting an indication for LTE/WLAN coordination according to another embodiment of the present invention.
FIG. 11 shows a method for transmitting an indication for LTE/WLAN coordination according to another embodiment of the present invention.
FIG. 12 shows a method for transmitting an indication for LTE/WLAN coordination according to another embodiment of the present invention.
FIG. 13 shows a method for transmitting an indication for LTE/WLAN coordination according to another embodiment of the present invention.
FIG. 14 shows a method for transmitting an indication for LTE/WLAN coordination according to another embodiment of the present invention.
FIG. 15 shows a method for transmitting an indication for LTE/WLAN coordination according to another embodiment of the present invention.
FIG. 16 shows a communication system to implement an embodiment of the present invention.

### Mode for the Invention

The technology described below can be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), etc. The CDMA can be implemented with a radio technology such as universal terrestrial radio access (UTRA) or CDMA-2000. The TDMA can be implemented with a radio technology such as global system for mobile communications (GSM)/general packet ratio service (GPRS)/enhanced data rate for GSM evolution (EDGE). The OFDMA can be implemented with a radio technology such as institute of electrical and electronics engineers (IEEE) 802.11 (Wi-Fi), IEEE 802.16 (WiMAX), IEEE 802-20, evolved UTRA (E-UTRA), etc. IEEE 802.16m is an evolution of IEEE 802.16e, and provides backward compatibility with an IEEE 802.16-based system. The UTRA is a part of a universal mobile telecommunication system (UMTS). 3rd generation partnership project (3GPP) long term evolution (LTE) is a part of an evolved UMTS (E-UMTS) using the E-UTRA. The 3GPP LTE uses the OFDMA in downlink and uses the SC-FDMA in uplink. LTE-advance (LTE-A) is an evolution of the 3GPP LTE.

For clarity, the following description will focus on the LTE-A. However, technical features of the present invention are not limited thereto.

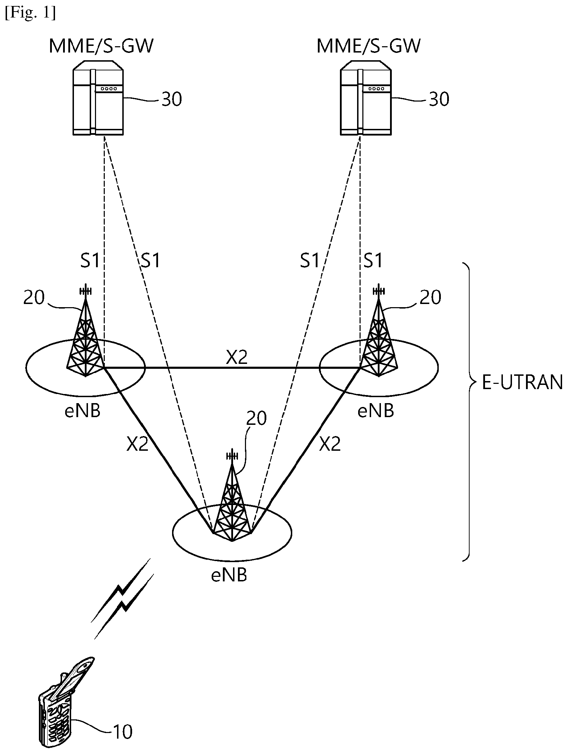

FIG. 1 shows LTE system architecture. The communication network is widely deployed to provide a variety of communication services such as voice over internet protocol (VoIP) through IMS and packet data.

Referring to FIG. 1, the LTE system architecture includes one or more user equipment (UE; 10), an evolved-UMTS terrestrial radio access network (E-UTRAN) and an evolved packet core (EPC). The UE 10 refers to a communication equipment carried by a user. The UE 10 may be fixed or mobile, and may be referred to as another terminology, such as a mobile station (MS), a user terminal (UT), a subscriber station (SS), a wireless device, etc.

The E-UTRAN includes one or more evolved node-B (eNB) 20, and a plurality of UEs may be located in one cell. The eNB 20 provides an end point of a control plane and a user plane to the UE 10. The eNB 20 is generally a fixed station that communicates with the UE 10 and may be referred to as another terminology, such as a base station (BS), an access point, etc. One eNB 20 may be deployed per cell.

Hereinafter, a downlink (DL) denotes communication from the eNB 20 to the UE 10, and an uplink (UL) denotes communication from the UE 10 to the eNB 20. In the DL, a transmitter may be a part of the eNB 20, and a receiver may be a part of the UE 10. In the UL, the transmitter may be a part of the UE 10, and the receiver may be a part of the eNB 20.

The EPC includes a mobility management entity (MME) and a serving gateway (S-GW). The MME/S-GW 30 may be positioned at the end of the network. For clarity, MME/S-GW 30 will be referred to herein simply as a "gateway," but it is understood that this entity includes both the MME and S-GW. A packet data network (PDN) gateway (P-GW) may be connected to an external network.

The MME provides various functions including non-access stratum (NAS) signaling to eNBs 20, NAS signaling security, access stratum (AS) security control, inter core network (CN) node signaling for mobility between 3GPP access networks, idle mode UE reachability (including control and execution of paging retransmission), tracking area list management (for UE in idle and active mode), packet data network (PDN) gateway (P-GW) and S-GW selection, MME selection for handovers with MME change, serving GPRS support node (SGSN) selection for handovers to 2G or 3G 3GPP access networks, roaming, authentication, bearer management functions including dedicated bearer establishment, support for public warning system (PWS) (which includes earthquake and tsunami warning system (ETWS) and commercial mobile alert system (CMAS)) message transmission. The S-GW host provides assorted functions including per-user based packet filtering (by e.g., deep packet inspection), lawful interception, UE Internet protocol (IP) address allocation, transport level packet marking in the DL, UL and DL service level charging, gating and rate enforcement, DL rate enforcement based on access point name aggregate maximum bit rate (APN-AMBR).

Interfaces for transmitting user traffic or control traffic may be used. The UE 10 is connected to the eNB 20 via a Uu interface. The eNBs 20 are connected to each other via an X2 interface. Neighboring eNBs may have a meshed network structure that has the X2 interface. A plurality of nodes may be connected between the eNB 20 and the gateway 30 via an S1 interface.

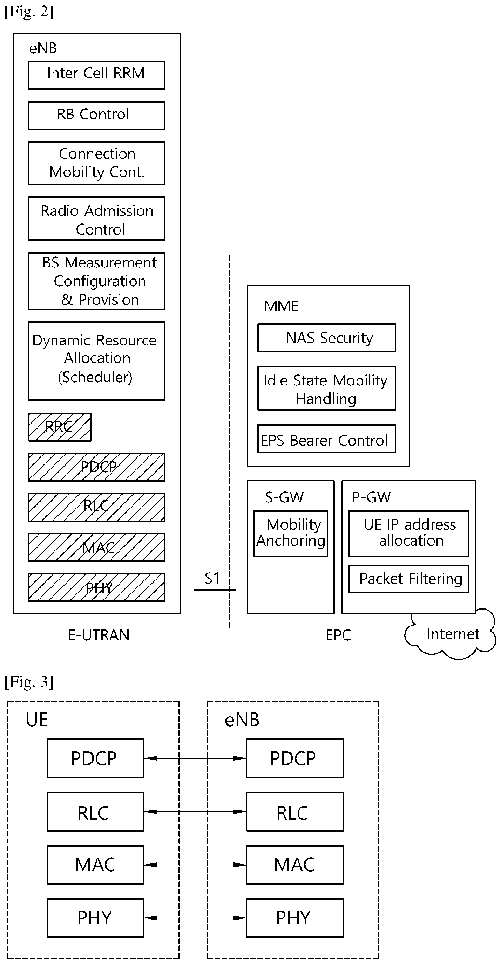

FIG. 2 shows a block diagram of architecture of a typical E-UTRAN and a typical EPC. Referring to FIG. 2, the eNB 20 may perform functions of selection for gateway 30, routing toward the gateway 30 during a radio resource control (RRC) activation, scheduling and transmitting of paging messages, scheduling and transmitting of broadcast channel (BCH) information, dynamic allocation of resources to the UEs 10 in both UL and DL, configuration and provisioning of eNB measurements, radio bearer control, radio admission control (RAC), and connection mobility control in LTE_ACTIVE state. In the EPC, and as noted above, gateway 30 may perform functions of paging origination, LTE_IDLE state management, ciphering of the user plane, SAE bearer control, and ciphering and integrity protection of NAS signaling.

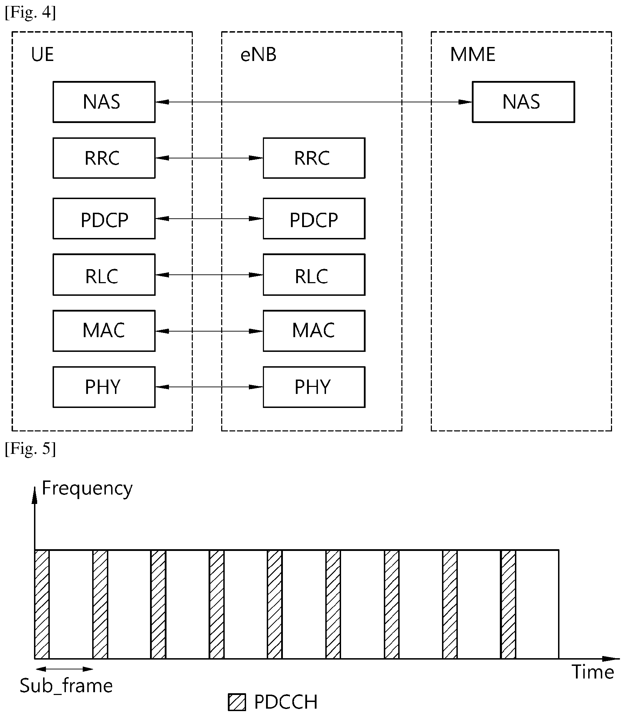

FIG. 3 shows a block diagram of a user plane protocol stack of an LTE system. FIG. 4 shows a block diagram of a control plane protocol stack of an LTE system. Layers of a radio interface protocol between the UE and the E-UTRAN may be classified into a first layer (L1), a second layer (L2), and a third layer (L3) based on the lower three layers of the open system interconnection (OSI) model that is well-known in the communication system.

A physical (PHY) layer belongs to the L1. The PHY layer provides a higher layer with an information transfer service through a physical channel. The PHY layer is connected to a medium access control (MAC) layer, which is a higher layer of the PHY layer, through a transport channel. A physical channel is mapped to the transport channel. Data between the MAC layer and the PHY layer is transferred through the transport channel. Between different PHY layers, i.e., between a PHY layer of a transmission side and a PHY layer of a reception side, data is transferred via the physical channel.

A MAC layer, a radio link control (RLC) layer, and a packet data convergence protocol (PDCP) layer belong to the L2. The MAC layer provides services to the RLC layer, which is a higher layer of the MAC layer, via a logical channel. The MAC layer provides data transfer services on logical channels. The RLC layer supports the transmission of data with reliability. Meanwhile, a function of the RLC layer may be implemented with a functional block inside the MAC layer. In this case, the RLC layer may not exist. The PDCP layer provides a function of header compression function that reduces unnecessary control information such that data being transmitted by employing IP packets, such as IPv4 or IPv6, can be efficiently transmitted over a radio interface that has a relatively small bandwidth.

A radio resource control (RRC) layer belongs to the L3. The RLC layer is located at the lowest portion of the L3, and is only defined in the control plane. The RRC layer controls logical channels, transport channels, and physical channels in relation to the configuration, reconfiguration, and release of radio bearers (RBs). The RB signifies a service provided the L2 for data transmission between the UE and E-UTRAN.

Referring to FIG. 3, the RLC and MAC layers (terminated in the eNB on the network side) may perform functions such as scheduling, automatic repeat request (ARQ), and hybrid ARQ (HARQ). The PDCP layer (terminated in the eNB on the network side) may perform the user plane functions such as header compression, integrity protection, and ciphering.

Referring to FIG. 4, the RLC and MAC layers (terminated in the eNB on the network side) may perform the same functions for the control plane. The RRC layer (terminated in the eNB on the network side) may perform functions such as broadcasting, paging, RRC connection management, RB control, mobility functions, and UE measurement reporting and controlling. The NAS control protocol (terminated in the MME of gateway on the network side) may perform functions such as a SAE bearer management, authentication, LTE_IDLE mobility handling, paging origination in LTE_IDLE, and security control for the signaling between the gateway and UE.

FIG. 5 shows an example of a physical channel structure. A physical channel transfers signaling and data between PHY layer of the UE and eNB with a radio resource. A physical channel consists of a plurality of subframes in time domain and a plurality of subcarriers in frequency domain. One subframe, which is 1 ms, consists of a plurality of symbols in the time domain. Specific symbol(s) of the subframe, such as the first symbol of the subframe, may be used for a physical downlink control channel (PDCCH). The PDCCH carries dynamic allocated resources, such as a physical resource block (PRB) and modulation and coding scheme (MCS).

A DL transport channel includes a broadcast channel (BCH) used for transmitting system information, a paging channel (PCH) used for paging a UE, a downlink shared channel (DL-SCH) used for transmitting user traffic or control signals, a multicast channel (MCH) used for multicast or broadcast service transmission. The DL-SCH supports HARQ, dynamic link adaptation by varying the modulation, coding and transmit power, and both dynamic and semi-static resource allocation. The DL-SCH also may enable broadcast in the entire cell and the use of beamforming.

A UL transport channel includes a random access channel (RACH) normally used for initial access to a cell, an uplink shared channel (UL-SCH) for transmitting user traffic or control signals, etc. The UL-SCH supports HARQ and dynamic link adaptation by varying the transmit power and potentially modulation and coding. The UL-SCH also may enable the use of beamforming.

The logical channels are classified into control channels for transferring control plane information and traffic channels for transferring user plane information, according to a type of transmitted information. That is, a set of logical channel types is defined for different data transfer services offered by the MAC layer.

The control channels are used for transfer of control plane information only. The control channels provided by the MAC layer include a broadcast control channel (BCCH), a paging control channel (PCCH), a common control channel (CCCH), a multicast control channel (MCCH) and a dedicated control channel (DCCH). The BCCH is a downlink channel for broadcasting system control information. The PCCH is a downlink channel that transfers paging information and is used when the network does not know the location cell of a UE. The CCCH is used by UEs having no RRC connection with the network. The MCCH is a point-to-multipoint downlink channel used for transmitting multimedia broadcast multicast services (MBMS) control information from the network to a UE. The DCCH is a point-to-point bi-directional channel used by UEs having an RRC connection that transmits dedicated control information between a UE and the network.

Traffic channels are used for the transfer of user plane information only. The traffic channels provided by the MAC layer include a dedicated traffic channel (DTCH) and a multicast traffic channel (MTCH). The DTCH is a point-to-point channel, dedicated to one UE for the transfer of user information and can exist in both uplink and downlink. The MTCH is a point-to-multipoint downlink channel for transmitting traffic data from the network to the UE.

Uplink connections between logical channels and transport channels include the DCCH that can be mapped to the UL-SCH, the DTCH that can be mapped to the UL-SCH and the CCCH that can be mapped to the UL-SCH. Downlink connections between logical channels and transport channels include the BCCH that can be mapped to the BCH or DL-SCH, the PCCH that can be mapped to the PCH, the DCCH that can be mapped to the DL-SCH, and the DTCH that can be mapped to the DL-SCH, the MCCH that can be mapped to the MCH, and the MTCH that can be mapped to the MCH.

An RRC state indicates whether an RRC layer of the UE is logically connected to an RRC layer of the E-UTRAN. The RRC state may be divided into two different states such as an RRC idle state (RRC_IDLE) and an RRC connected state (RRC_CONNECTED). In RRC_IDLE, the UE may receive broadcasts of system information and paging information while the UE specifies a discontinuous reception (DRX) configured by NAS, and the UE has been allocated an identification (ID) which uniquely identifies the UE in a tracking area and may perform public land mobile network (PLMN) selection and cell re-selection. Also, in RRC_IDLE, no RRC context is stored in the eNB.

In RRC_CONNECTED, the UE has an E-UTRAN RRC connection and a context in the E-UTRAN, such that transmitting and/or receiving data to/from the eNB becomes possible. Also, the UE can report channel quality information and feedback information to the eNB. In RRC_CONNECTED, the E-UTRAN knows the cell to which the UE belongs. Therefore, the network can transmit and/or receive data to/from UE, the network can control mobility (handover and inter-radio access technologies (RAT) cell change order to GSM EDGE radio access network (GERAN) with network assisted cell change (NACC)) of the UE, and the network can perform cell measurements for a neighboring cell.

In RRC_IDLE, the UE specifies the paging DRX cycle. Specifically, the UE monitors a paging signal at a specific paging occasion of every UE specific paging DRX cycle. The paging occasion is a time interval during which a paging signal is transmitted. The UE has its own paging occasion. A paging message is transmitted over all cells belonging to the same tracking area. If the UE moves from one tracking area (TA) to another TA, the UE will send a tracking area update (TAU) message to the network to update its location.

3GPP/WLAN radio interworking Release-12 solution enhances CN-based WLAN offload by improving user quality of experience (QoE) and network utilization and providing more control to operators. These improvements can be further enhanced by LTE/WLAN aggregation and further LTE/WLAN inter-working enhancements relevant to both co-located and non-co-located deployment scenarios.

The benefits of the LTE/WLAN aggregation are as follows.
(1) WLAN access network becomes transparent to CN in the sense that it should not require WLAN-specific CN nodes and CN interfaces. This provides the operator unified control and management of both 3GPP and WLAN networks as opposed to separately managing them.
(2) Aggregation and tight integration at radio level allows for real-time channel and load aware radio resource management across WLAN and LTE to provide significant capacity and QoE improvements.
(3) The reliable LTE network can be used as a control and mobility anchor to provide QoE improvements, minimize service interruption, and increase operator control.
(4) No new WLAN-related CN signaling is needed, thus reducing CN load.

The benefits of LTE/WLAN aggregation can be realized in both co-located and non-co-located deployments. For the collocated case, corresponding to the small cell deployment, LTE eNB and WLAN AP are physically integrated and connected via an internal interface. This scenario is similar to LTE carrier aggregation. For the non-co-located case, LTE eNB and WLAN are connected via an external interface. This scenario is similar to LTE dual connectivity. In both collocated and non-collocated cases, the WLAN link behaves as second access for data while the control is managed by eNB via RRC.

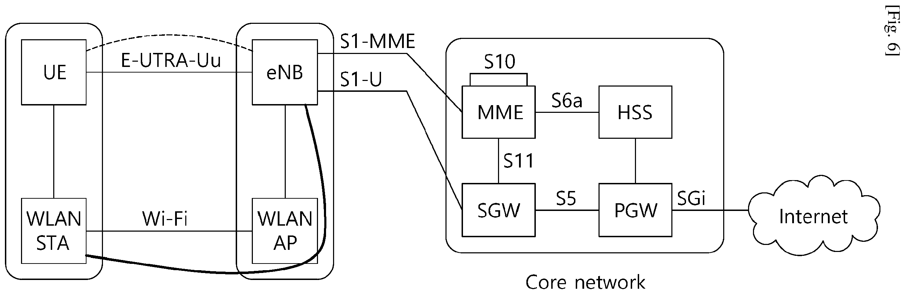

FIG. 6 shows an example of architecture for LTE/WLAN coordination. The architecture shown in FIG. 6 corresponds to collocated case. Referring to FIG. 6, the eNB is collocated with WLAN AP. Or, the eNB may be connected with WLAN by an interface. Further, the UE may be collocated with WLAN station (STA). The eNB is connected with the eNB via E-UTRA Uu interface, and the WLAN STA is connected with the WLAN AP via Wi-Fi. In this case, traffic of both LTE and WLAN may be transferred to the core network via eNB. That is, traffic of WLAN may be managed by LTE.

When the architecture for LTE/WLAN coordination shown above is used for LTE/ WLAN aggregation/interworking, it may be a problem how the eNB decides to offload bearers from LTE to WLAN or from WLAN to LTE. Further, it may also be a problem how the core network knows whether a specific UE is served by WLAN or not.

In order to solve the problems described above, a method for enhancing 3GPP/WLAN coordination is proposed. According to an embodiment of the present invention, a method for assisting the eNB to decide to offload bearers from LTE to WLAN or from WLAN to LTE is proposed. According to another embodiment of the present invention, a method for informing the core network whether a specific UE is served by WLAN or not is proposed.

First, a method for transmitting an indication for LTE/WLAN coordination in order to assist the eNB for deciding to offload bearers is described according to embodiments of the present invention.

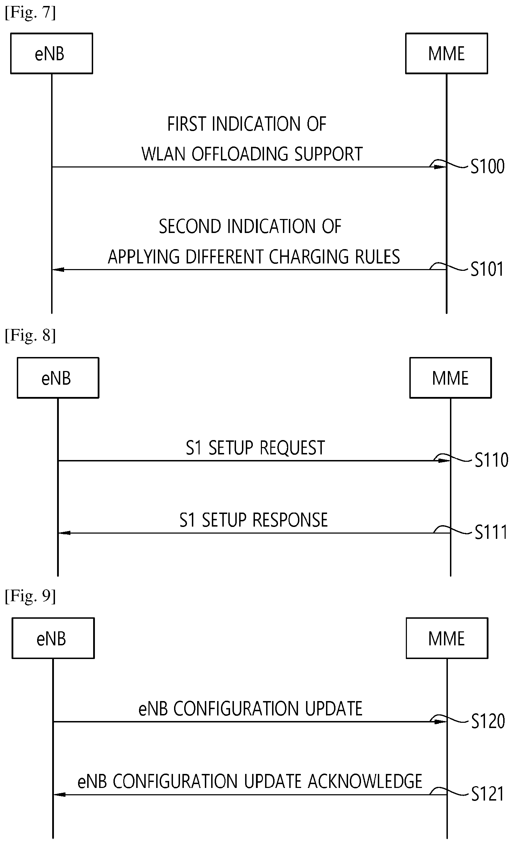

FIG. 7 shows a method for transmitting an indication for LTE/WLAN coordination according to an embodiment of the present invention. The method shown in FIG. 7 corresponds to a cell-specific scheme. That is, the method shown in FIG. 7 may be applied to all UEs connected to the eNB.

In step S100, the eNB transmits a first indication of WLAN offloading support to the MME. The first indication indicates whether the eNB supports WLAN offloading or not. The first indication may be transmitted via S1 setup request message during S1 setup procedure, or via eNB configuration update message after S1 setup is completed. However, the S1 setup request message or eNB configuration update message is merely an example, and the first indication may be transmitted via other existing messages or a newly defined message for this purpose. Further, together with the first indication of WLAN offloading support, the WLAN ID (e.g. service set ID (SSID)) may be transmitted to the MME.

In step S101, the MME transmits a second indication of applying different charging rules to the eNB. The second indication indicates the eNB needs to report to the MME about the offloading status of the specific bearers per UE. The second indication may be transmitted via S1 setup response message, as a response to the S1 setup request message, during S1 setup procedure, or via eNB configuration update acknowledge message, as a response to the eNB configuration update message, after S1 setup is completed. However, the S1 setup response message or eNB configuration update acknowledge message is merely an example, and the second indication may be transmitted via other existing messages or a newly defined message for this purpose.

FIG. 8 shows a method for transmitting an indication for LTE/WLAN coordination according to another embodiment of the present invention. The method shown in FIG. 8 corresponds to one example of the method shown in FIG. 7, which is realized by the S1 setup request/response message during S1 setup procedure.

In step S110, the eNB transmits a S1 setup request message to the MME. The S1 setup request message is used to transfer information for a transport network layer (TNL) association. Table 1 and Table 2 show an example of the S1 setup request message according to an embodiment of the present invention.

**[Table 1]**

| IE/Group Name | Presence | Range | IE type and reference | Semantic s description | Criticalit y | Assigned Criticalit y |
|---|---|---|---|---|---|---|
| Message Type | M | | 9.2.1.1 | | YES | reject |
| Global Enb ID | M | | 9.2.1.37 | | YES | reject |
| Enb Name | O | | Printable String(1.. 150,...) | | YES | ignore |
| Supported Tas | | *1..<maxnoof TACs*> | | Supporte d Tas in the Enb. | GLOBA L | reject |
| >TAC | M | | 9.2.3.7 | Broadcas ted TAC. | - | |
| >Broadcast PLMNs | | *1*..*<maxnoof BPLMNs>* | | Broadcas ted PLMNs. | - | |
| >>PLMN Identity | M | | 9.2.3.8 | | | |
| Default Paging DRX | M | | 9.2.1.16 | | YES | ignore |
| CSG Id List | | *0..1* | | | GLOBA L | reject |
| >CSG Id | M | 1 .. <maxnoofC SGIds> | 9.2.1.62 | | | |
| **indication** of WLAN offloading support | **O** | | | | | |
| **List** of WLAN | **O** | | | | | |

**[Table 2]**

| Range bound | Explanation |
|---|---|
| maxnoofTACs | Maximum no. of TACs. Value is 256. |
| MaxnoofBPLMNs | Maximum no. of Broadcasted PLMNs. Value is 6. |
| MaxnoofCSGIds | Maximum no. of CSG Ids within the CSG Id List. Value is 256. |

Referring to Table 1, the S1 setup request message may include "indication of WLAN offloading support" field, which corresponds to the first indication shown in FIG. 7. Further, the S1 setup request message may include "List of WLAN" field.

In step S111, the MME transmits a S 1 setup response message to the eNB. The S 1 setup response message is used to transfer information for a TNL association. Table 3 and Table 4 show an example of the S1 setup response message according to an embodiment of the present invention.

**[Table 3]**

| IE/Group Name | Presenc e | Range | IE type and reference | Semantics description | Critical ity | Assigne d Criticali ty |
|---|---|---|---|---|---|---|
| Message Type | M | | 9.2.1.1 | | YES | reject |
| MME Name | O | | PrintableS tring(1..15 0,...) | | YES | ignore |
| Served GUMMEIs | | *1..*<*maxnoofR ATs*> | | The LTE related pool configuratio n is included on the first place in the list. | GLOB AL | reject |
| >Served PLMNs | | *1..*<*maxnoofP LMNsPerMME* > | | | - | |
| >>PLMN Identity | M | | 9.2.3.8 | | - | |
| >Served GroupIDs | | *1..*<*maxnoofG rouplDs>* | | | - | |
| >>MME Group ID | M | | OCTET STRING (2) | | - | |
| >Served MMECs | | *1..*<*maxnoofM MECs>* | | | - | |
| >>MME Code | M | | 9.2.3.12 | | - | |
| Relative MME Capacity | M | | 9.2.3.17 | | YES | ignore |
| MME Relay Support Indicator | O | | 9.2.1.82 | | YES | ignore |
| Criticality Diagnostics | O | | 9.2.1.21 | | YES | ignore |
| **with** indication of applying different charging rule | **O** | | | | | |

**[Table 4]**

| Range bound | Explanation |
|---|---|
| maxnoofPLMNsPerMME | Maximum no. of PLMNs per MME. Value is 32. |
| maxnoofRATs | Maximum no. of RATs. Value is 8. |
| maxnoofGroupIDs | Maximum no. of GroupIDs per node per RAT. Value is 65535. |
| maxnoofMMECs | Maximum no. of MMECs per node per RAT. Value is 256. |

Referring to Table 3, the S1 setup response message may include "with indication of applying different charging rule" field, which corresponds to the second indication shown in FIG. 7.

FIG. 9 shows a method for transmitting an indication for LTE/WLAN coordination according to another embodiment of the present invention. The method shown in FIG. 9 corresponds to one example of the method shown in FIG. 7, which is realized by the eNB configuration update/acknowledge message during eNB configuration update procedure.

In step S120, the eNB transmits an eNB configuration update message to the MME. The eNB configuration update message is used to transfer updated information for TNL association. Table 5 and Table 6 show an example of the eNB configuration update message according to an embodiment of the present invention.

**[Table 5]**

| IE/Group Name | Presenc e | Range | IE type and reference | Semantics description | Criticali ty | Assigne d Criticali ty |
|---|---|---|---|---|---|---|
| Message Type | M | | 9.2.1.1 | | YES | reject |
| eNB Name | O | | PrintableS tring(1..15 0,...) | | YES | ignore |
| Supported TAs | | *0..*<*maxnoofTA Cs>* | | Supported TAs in the eNB. | GLOB AL | reject |
| >TAC | M | | 9.2.3.7 | Broadcasted TAC. | - | |
| >Broadcast PLMNs | | *1..*<*maxnoofBP LMNs>* | | Broadcasted PLMNs. | - | |
| >>PLMN Identity | M | | 9.2.3.8 | | - | |
| CSG Id List | | *0..1* | | | GLOB AL | reject |
| >CSG Id | | *1*.. < maxnoofCSGId > | 9.2.1.62 | | - | |
| Default Paging DRX | O | | 9.2.1.16 | | YES | ignore |
| **indication** of WLAN of floading support | **O** | | | | | |
| **List** of WLAN | **O** | | | | | |

**[Table 6]**

| Range bound | Explanation |
|---|---|
| maxnoofTACs | Maximum no. of TACs. Value is 256. |
| maxnoofBPLMNs | Maximum no. of Broadcasted PLMNs. Value is 6. |
| maxnoofCSGIds | Maximum no. of CSG Ids within the CSG Id List. Value is 256. |

Referring to Table 5, the eNB configuration update message may include "indication of WLAN offloading support" field, which corresponds to the first indication shown in FIG. 7. Further, the eNB configuration update message may include "List of WLAN" field.

In step S121, the MME transmits an eNB configuration update acknowledge message to the eNB. The eNB configuration update acknowledge message is used to acknowledge the eNB transfer updated information for a TNL association. Table 7 shows an example of the eNB configuration update acknowledge message according to an embodiment of the present invention.

**[Table 7]**

| IE/Group Name | Presence | Range | IE type and reference | Semantic s description | Criticalit y | Assigned Criticalit y |
|---|---|---|---|---|---|---|
| Message Type | M | | 9.2.1.1 | | YES | reject |
| Criticality Diagnostics | O | | 9.2.1.21 | | YES | ignore |
| **with** indication of applying different charging rule | **O** | | | | | |

Referring to Table 7, the eNB configuration update acknowledge message may include "with indication of applying different charging rule" field, which corresponds to the second indication shown in FIG. 7.

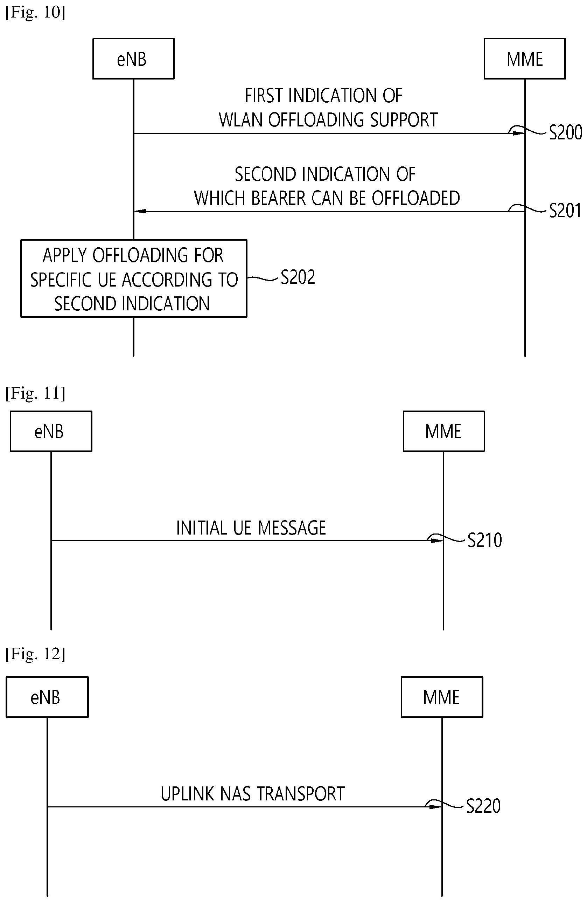

FIG. 10 shows a method for transmitting an indication for LTE/WLAN coordination according to another embodiment of the present invention. The method shown in FIG. 10 corresponds to a UE-specific scheme. That is, the method shown in FIG. 7 may be applied to the specific UE connected to the eNB.

In step S200, the eNB transmits a first indication of WLAN offloading support to the MME. The first indication indicates whether the eNB supports WLAN offloading or not. The first indication may be transmitted via initial UE message or uplink NAS transport message. However, the initial UE message or uplink NAS transport message is merely an example, and the first indication may be transmitted via other existing messages or a newly defined message for this purpose. Further, together with the first indication of WLAN offloading support, the supported WLAN ID (e.g. SSID) may be transmitted to the MME.

In step S201, the MME transmits a second indication of which bearer can be offloaded to the eNB. The second indication indicates a guideline about which bearer can be offloaded from LTE to WLAN or from WLAN to LTE. More specifically, the second indication may indicate at least one of the followings:
(1) All E-UTRAN radio access bearers (E-RABs) of the specific UE can be offloaded.
(2) Each specific E-RAB of the specific UE can be offloaded or not
(3) Partial of E-RABs of the specific UE can be offload or not.
(4) All E-RABs of the specific UE cannot be offloaded.
(5) The offloading affects to the policy of the MME, e.g. charging. Thus, if the second indication indicates that the offloading affects to the policy of the MME, the eNB needs to report to the MME whether the offloading is performed or not.

The second indication may be transmitted via initial context setup request message, or via E-RAB setup request message, or via E-RAB modify request message. However, the initial context setup request message, E-RAB setup request message or E-RAB modify request message is merely an example, and the second indication may be transmitted via other existing messages or a newly defined message for this purpose.

Upon receiving the second indication, in step S202, the eNB applies the offloading scheme for the specific UE according to the second indication.

Second, a method for informing the core network (e.g. MME) whether a specific UE or a specific bearer is served by WLAN or not is described according to an embodiment of the present invention. After applying the offloading in radio level in step S201 shown above, the eNB may feedback to the MME about whether the offloading is done for the specific UE or not. More specifically, the eNB may notify the MME of the detailed E-RABs which are offloaded from LTE to WLAN or from WLAN to LTE. By this, the core network can know that the specific UE is served by WLAN or not. Alternatively, other dedicated signaling scheme may be possible. Whenever the eNB needs to notify the MME about offloading, the eNB may trigger the signaling. More specifically, the eNB may notify the MME about whether the offloading is performed or not. That is, the eNB may notify the MME about the detailed E-RABs which are offloaded from LTE to WLAN or from WLAN to LTE. Further, the eNB may notify the MME about the offloaded WLAN IDs, which may impact the charging policy. Upon receiving the information from the eNB, the MME may forward the information to home subscriber server (HSS), so that the policy can be applied.

FIG. 11 shows a method for transmitting an indication for LTE/WLAN coordination according to another embodiment of the present invention. The method shown in FIG. 11 corresponds to the step S200 of FIG. 10, which is realized by the initial UE message.

In step S210, the eNB transmits an initial UE message to the MME. The initial UE message is used to transfer the initial layer 3 message to the MME over the S1 interface. Table 8 shows an example of the initial UE message according to an embodiment of the present invention.

**[Table 8]**

| IE/Group Name | Presence | Range | IE type and reference | Semantics description | Criticali ty | Assigne d Criticalit y |
|---|---|---|---|---|---|---|
| Message Type | M | | 9.2.1.1 | | YES | ignore |
| eNB UE S1AP ID | M | | 9.2.3.4 | | YES | reject |
| NAS-PDU | M | | 9.2.3.5 | | YES | reject |
| TAI | Mzl | | 9.2.3.16 | Indicating the Tracking Area from which the UE has sent the NAS message. | YES | reject |
| E-UTRAN CGI | M | | 9.2.1.38 | Indicating the E-UTRAN CGI from which the UE has sent the NAS message. | YES | ignore |
| RRC Establishment Cause | M | | 9.2.1.3a | | YES | Ignore |
| S-TMSI | O | | 9.2.3.6 | | YES | reject |
| CSG Id | O | | 9.2.1.62 | | YES | reject |
| GUMMEI | O | | 9.2.3.9 | | YES | reject |
| Cell Access Mode | O | | 9.2.1.74 | | YES | reject |
| GW Transport Layer Address | O | | Transport Layer Address 9.2.2.1 | Indicating GW Transport Layer Address if the GW is collocated with eNB. | YES | ignore |
| Relay Node Indicator | O | | 9.2.1.79 | Indicating a relay node. | YES | reject |
| GUMMEI Type | O | | ENUMER ATED (native, mapped, ...) | | YES | ignore |
| Tunnel Information for BBF | O | | Tunnel Information 9.2.2.3 | Indicating HeNB's Local IP Address assigned by the broadband access provider, UDP port Number. | YES | ignore |
| **indication** of WLAN offloading support and or with the supported WLAN SSIDs | **O** | | | | | |

Referring to Table 8, the initial UE message may include "indication of WLAN offloading support and or with the supported WLAN SSIDs" field, which corresponds to the first indication shown in FIG. 10.

FIG. 12 shows a method for transmitting an indication for LTE/WLAN coordination according to another embodiment of the present invention. The method shown in FIG. 12 corresponds to the step S200 of FIG. 10, which is realized by the uplink NAS transport message.

In step S220, the eNB transmits an uplink NAS transport message to the MME. The uplink NAS transport message is used for carrying NAS information over the S1 interface. Table 9 shows an example of the uplink NAS transport message according to an embodiment of the present invention.

**[Table 9]**

| **IE/**Group Name | **Presenc e** | **Rang e** | **IE** type and reference | **Semantics** description | **Critical ity** | **Assigne d** Criticali ty |
|---|---|---|---|---|---|---|
| Message Type | M | | 9.2.1.1 | | YES | ignore |
| MME UE S1AP ID | M | | 9.2.3.3 | | YES | reject |
| eNB UE S1AP ID | M | | 9.2.3.4 | | YES | reject |
| NAS-PDU | M | | 9.2.3.5 | | YES | reject |
| E-UTRAN CGI | M | | 9.2.1.38 | | YES | ignore |
| TAI | M | | 9.2.3.16 | | YES | ignore |
| GW Transport Layer Address | O | | Transport Layer Address 9.2.2.1 | Indicating GW Transport Layer Address if the GW is collocated with eNB. | YES | ignore |
| **indication** of WLAN offloading support and or with the supported WLAN SSIDs | **O** | | | | | |

Referring to Table 9, the uplink NAS transport message may include "indication of WLAN offloading support and or with the supported WLAN SSIDs" field, which corresponds to the first indication shown in FIG. 10.

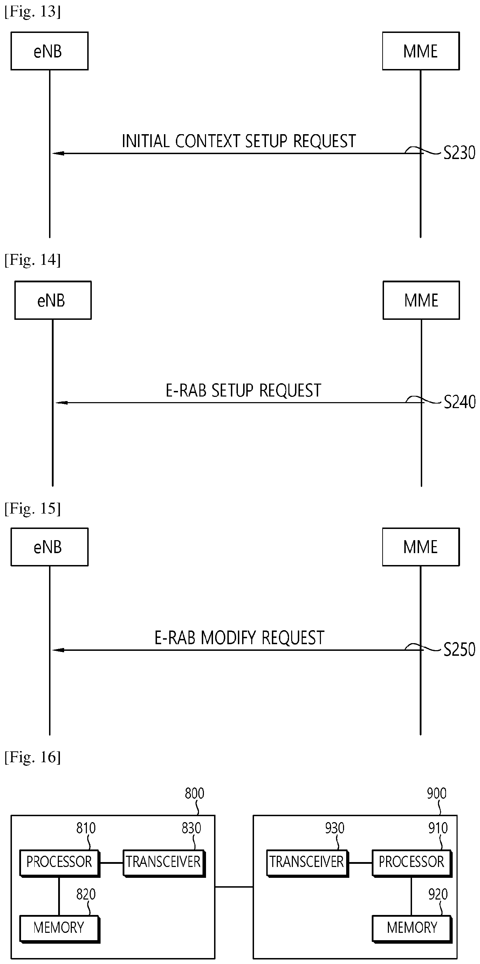

FIG. 13 shows a method for transmitting an indication for LTE/WLAN coordination according to another embodiment of the present invention. The method shown in FIG. 13 corresponds to the step S201 of FIG. 10, which is realized by the initial context setup request message.

In step S230, the eNB transmits an initial context setup request message to the MME. The initial context setup request message is used to request the setup of a UE context. Table 10 shows an example of the initial context setup request message according to an embodiment of the present invention.

**[Table 10]**

| IE/Group Name | Presence | Range | IE type and reference | Semantics description | Criticalit y | Assigned Criticalit y |
|---|---|---|---|---|---|---|
| Message Type | M | | 9.2.1.1 | | YES | reject |
| MME UE S1AP ID | M | | 9.2.3.3 | | YES | reject |
| eNB UE S1AP ID | M | | 9.2.3.4 | | YES | reject |
| UE Aggregate Maximum Bit Rate | M | | 9.2.1.20 | | YES | reject |
| E-RAB to Be Setup List | | *1* | | | YES | reject |
| >E-RAB to Be Setup Item IEs | | *1* .. <maxnoo fE-RABs > | | | EACH | reject |
| >>E-RAB ID | M | | 9.2.1.2 | | - | |
| >>*E*-RAB Level QoS Parameters | M | | 9.2.1.15 | Includes necessary QoS parameters. | - | |
| >>Transport Layer Address | M | | 9.2.2.1 | | - | |
| >>GTP-TEID | M | | 9.2.2.2 | | - | |
| >>NAS-PDU | O | | 9.2.3.5 | | - | |
| >>Correlation ID | O | | 9.2.1.80 | | YES | ignore |
| >>offloadable or not | **O** | | | | | |
| UE Security Capabilities | M | | 9.2.1.40 | | YES | reject |
| Security Key | M | | 9.2.1.41 | The KeNB is provided after the keygeneration in the MME, see TS 33.401 [15]. | YES | reject |
| Trace Activation | O | | 9.2.1.4 | | YES | ignore |
| Handover Restriction List | O | | 9.2.1.22 | | YES | ignore |
| UE Radio Capability | O | | 9.2.1.27 | | YES | ignore |
| Subscriber Profile ID for RAT/ Frequency priority | O | | 9.2.1.39 | | YES | ignore |
| CS Fallback Indicator | O | | 9.2.3.21 | | YES | reject |
| SRVCC Operation Possible | O | | 9.2.1.58 | | YES | ignore |
| CSG Membership Status | O | | 9.2.1.73 | | YES | ignore |
| Registered LAI | O | | 9.2.3.1 | | YES | ignore |
| GUMMEI | O | | 9.2.3.9 | This IE indicates the MME serving the UE. | YES | ignore |
| MME UE S1AP ID 2 | O | | 9.2.3.3 | This IE indicates the MME UE S1AP ID assigned by the MME. | YES | ignore |
| Management Based MDT Allowed | O | | 9.2.1.83 | | YES | ignore |
| Management Based MDT PLMN List | O | | MDT PLMN List9.2.1. 89 | | YES | ignore |
| **Offloading** to WLAN | **O** | | | | | |
| **Not** Offloading to WLAN | **O** | | | | | |
| **Offloading** to WLAN affects to MME policy, e.g, charging | **O** | | | | | |

Referring to Table 10, the initial context setup request message may include "offloadable or not" field for each E-RAB, which corresponds to the first indication shown in FIG. 10 indicating whether each specific E-RAB of the specific UE can be offloaded or not. Further, the initial context setup request message may include "offloading to WLAN" field, which corresponds to the first indication shown in FIG. 10 indicating that all E-RABs of the specific UE can be offloaded. Further, the initial context setup request message may include "Not Offloading to WLAN" field, which corresponds to the first indication shown in FIG. 10 indicating that all E-RABs of the specific UE cannot be offloaded. Further, the initial context setup request message may include "Offloading to WLAN affects to MME policy, e.g. charging" field, which corresponds to the first indication shown in FIG. 10 indicating that the offloading affects to the policy of the MME.

FIG. 14 shows a method for transmitting an indication for LTE/WLAN coordination according to another embodiment of the present invention. The method shown in FIG. 14 corresponds to the step S201 of FIG. 10, which is realized by the E-RAB setup request message.

In step S240, the eNB transmits an E-RAB setup request message to the MME. The E-RAB setup request message is used to request the eNB to assign resources on Uu and S1 for one or several E-RABs. Table 11 shows an example of the E-RAB setup request message according to an embodiment of the present invention.

**[Table 11]**

| IE/Group Name | Presence | Range | IE type and reference | Semantics descriptio n | Criticali ty | Assigne d Criticalit y |
|---|---|---|---|---|---|---|
| Message Type | M | | 9.2.1.1 | | YES | reject |
| MME UE S1AP ID | M | | 9.2.3.3 | | YES | reject |
| eNB UE S1AP ID | M | | 9.2.3.4 | | YES | reject |
| UE Aggregate Maximum Bit Rate | O | | 9.2.1.20 | | YES | reject |
| E-RAB to be Setup List | | *1* | | | YES | reject |
| >E-RAB To Be Setup Item IEs | | *1* .. *<maxnoof* E-RAB s> | | | EACH | reject |
| >>E-RAB ID | M | | 9.2.1.2 | | - | |
| >>E-RAB Level QoS Parameters | M | | 9.2.1.15 | Includes necessary QoS parameters. | - | |
| >>Transport Layer Address | M | | 9.2.2.1 | | - | |
| >>GTP-TEID | M | | 9.2.2.2 | EPC TEID. | - | |
| >>NAS-PDU | M | | 9.2.3.5 | | - | |
| >>Correlation ID | O | | 9.2.1.80 | | YES | ignore |
| >>offloadable or not | **O** | | | | | |
| **Offloading to** WLAN | **O** | | | | | |
| **Not** Offloading to WLAN | **O** | | | | | |
| **Offloading** to WLAN affects to MME policy, e.g. charging | **O** | | | | | |

Referring to Table 11, the E-RAB setup request message may include "offloadable or not" field for each E-RAB, which corresponds to the first indication shown in FIG. 10 indicating whether each specific E-RAB of the specific UE can be offloaded or not. Further, the E-RAB setup request message may include "offloading to WLAN" field, which corresponds to the first indication shown in FIG. 10 indicating that all E-RABs of the specific UE can be offloaded. Further, the E-RAB setup request message may include "Not Offloading to WLAN" field, which corresponds to the first indication shown in FIG. 10 indicating that all E-RABs of the specific UE cannot be offloaded. Further, the E-RAB setup request message may include "Offloading to WLAN affects to MME policy, e.g. charging" field, which corresponds to the first indication shown in FIG. 10 indicating that the offloading affects to the policy of the MME.

FIG. 15 shows a method for transmitting an indication for LTE/WLAN coordination according to another embodiment of the present invention. The method shown in FIG. 15 corresponds to the step S201 of FIG. 10, which is realized by the E-RAB modify request message.

In step S240, the eNB transmits an E-RAB modify request message to the MME. The E-RAB modify request message is used to request the eNB to modify the data radio bearers and the allocated resources on Uu and S1 for one or several E-RABs. Table 12 shows an example of the E-RAB modify request message according to an embodiment of the present invention.

**[Table 12]**

| IE/Group Name | Presence | Range | IE type and reference | Semantic s description | Criticalit y | Assigned Criticalit y |
|---|---|---|---|---|---|---|
| Message Type | M | | 9.2.1.1 | | YES | reject |
| MME UE S1AP ID | M | | 9.2.3.3 | | YES | reject |
| eNB UE S1AP ID | M | | 9.2.3.4 | | YES | reject |
| UE Aggregate Maximum Bit Rate | O | | 9.2.1.20 | | YES | reject |
| E-RAB to be Modified List | | *1* | | | YES | reject |
| >E-RAB To Be Modified Item IEs | | *1* .. <maxnoofE-RABs> | | | EACH | reject |
| >>E-RAB ID | M | | 9.2.1.2 | | - | |
| >>E-RAB Level QoS Parameters | M | | 9.2.1.15 | Includes necessary QoS parameters. | - | |
| >>NAS-PDU | M | | 9.2.3.5 | | - | |
| >>offloadable or not | **O** | | | | | |
| **Offloading** to WLAN | **O** | | | | | |
| **Not** Offloading to WLAN | **O** | | | | | |
| **Offloading** to WLAN affects to MME policy. e.g. charging | **O** | | | | | |

Referring to Table 12, the E-RAB modify request message may include "offloadable or not" field for each E-RAB, which corresponds to the first indication shown in FIG. 10 indicating whether each specific E-RAB of the specific UE can be offloaded or not. Further, the E-RAB modify request message may include "offloading to WLAN" field, which corresponds to the first indication shown in FIG. 10 indicating that all E-RABs of the specific UE can be offloaded. Further, the E-RAB modify request message may include "Not Offloading to WLAN" field, which corresponds to the first indication shown in FIG. 10 indicating that all E-RABs of the specific UE cannot be offloaded. Further, the E-RAB modify request message may include "Offloading to WLAN affects to MME policy, e.g. charging" field, which corresponds to the first indication shown in FIG. 10 indicating that the offloading affects to the policy of the MME.

FIG. 16 shows a communication system to implement an embodiment of the present invention.

An eNB 800 may include a processor 810, a memory 820 and a transceiver 830. The processor 810 may be configured to implement proposed functions, procedures and/or methods described in this description. Layers of the radio interface protocol may be implemented in the processor 810. The memory 820 is operatively coupled with the processor 810 and stores a variety of information to operate the processor 810. The transceiver 830 is operatively coupled with the processor 810, and transmits and/or receives a radio signal.

A MME 900 may include a processor 910, a memory 920 and a transceiver 930. The processor 910 may be configured to implement proposed functions, procedures and/or methods described in this description. Layers of the radio interface protocol may be implemented in the processor 910. The memory 920 is operatively coupled with the processor 910 and stores a variety of information to operate the processor 910. The transceiver 930 is operatively coupled with the processor 910, and transmits and/or receives a radio signal.

The processors 810, 910 may include application-specific integrated circuit (ASIC), other chipset, logic circuit and/or data processing device. The memories 820, 920 may include read-only memory (ROM), random access memory (RAM), flash memory, memory card, storage medium and/or other storage device. The transceivers 830, 930 may include baseband circuitry to process radio frequency signals. When the embodiments are implemented in software, the techniques described herein can be implemented with modules (e.g., procedures, functions, and so on) that perform the functions described herein. The modules can be stored in memories 820, 920 and executed by processors 810, 910. The memories 820, 920 can be implemented within the processors 810, 910 or external to the processors 810, 910 in which case those can be communicatively coupled to the processors 810, 910 via various means as is known in the art.

In view of the exemplary systems described herein, methodologies that may be implemented in accordance with the disclosed subject matter have been described with reference to several flow diagrams. While for purposed of simplicity, the methodologies are shown and described as a series of steps or blocks, it is to be understood and appreciated that the claimed subject matter is not limited by the order of the steps or blocks, as some steps may occur in different orders or concurrently with other steps from what is depicted and described herein. Moreover, one skilled in the art would understand that the steps illustrated in the flow diagram are not exclusive and other steps may be included or one or more of the steps in the example flow diagram may be deleted without affecting the scope of the present disclosure.

## Claims

1. A method for transmitting a first indication in a wireless communication system, the method being performed by an eNodeB, eNB, of 3rd generation partnership project long-term evolution, 3GPP LTE network, comprising:
transmitting (S200), to a mobility management entity, MME, the first indication indicating whether the eNB supports a wireless local area network, WLAN, offloading or not;
receiving (S201), from the MME, an initial context setup request message,
wherein the initial context setup request message includes a second indication indicating one of i) all E-UTRAN radio access bearers, E-RABs, ii) a specific E-RAB among the all E-RABs and iii) partial of E-RABs among the all E-RABs,
wherein the second indication is an indication for the one of i) the all E-RABs, ii) the specific E-RAB and iii) the partial of E-RABs of a specific UE which can be offloaded to an WLAN access network;
upon receiving the second indication, performing (S202) the offloading for the specific UE to the WLAN access network according to the second indication; and
wherein the first indication is transmitted via an uplink non-access stratum, NAS, transport message, which is used for carrying NAS information over the S1 interface,
wherein the first indication is transmitted with a specific field for an indication of WLAN offloading support with a supported WLAN identifier, ID, and
wherein the eNB feedbacks to the MME about whether the offloading is done for the specific UE or not after applying the offloading in a radio level,
wherein the eNB notifies the MME about at least one detailed E-RABs which is offloaded from the 3GPP LTE network to the WLAN access network.

## Patentansprüche

1. Verfahren zum Übertragen einer ersten Anzeige in einem drahtlosen Kommunikationssystem, wobei das Verfahren von einem eNodeB, eNB, eines 3rd Generation Partnership Project Long Term Evolution, 3GPP LTE, -Netzes durchgeführt wird, umfassend:
Übertragen (S200) der ersten Anzeige, die angibt, ob der eNB ein drahtloses lokales Netzwerk, WLAN, unterstützt oder nicht, an eine Mobilitätsmanagementeinheit, MME;
Empfangen (S201) einer anfänglichen Kontext-Setup-Anforderungsnachricht von der MME,
wobei die anfängliche Kontext-Setup-Anforderungsnachricht eine zweite Angabe enthält, die einen von i) allen E-UTRAN-Funkzugangsträgern, E-RABs, ii) einem spezifischen E-RAB unter den allen E-RABs und iii) teilweisen von E-RABs unter den allen E-RABs angibt,
wobei die zweite Anzeige eine Anzeige ist für den einen von i) den allen E-RABs, ii) dem spezifischen E-RAB und iii) dem teilweisen von E-RABs eines spezifischen UE ist, welches in ein WLAN-Zugangsnetz abgeladen werden kann;
bei Empfang der zweiten Anzeige, Durchführen (S202) des Abladens für das spezifische UE an das WLAN-Zugangsnetz gemäß der zweiten Anzeige; und
wobei die erste Anzeige über eine Uplink Non-Access Stratum, NAS, - Transportnachricht, übertragen wird, die zur Übertragung von NAS-Informationen über die S1-Schnittstelle verwendet wird,
wobei die erste Anzeige mit einem spezifischen Feld für eine Anzeige einer WLAN-Ablade-Unterstützung mit einer unterstützten WLAN-Kennung, ID, übertragen wird und
wobei der eNB dem MME eine Rückmeldung darüber gibt, ob das Abladen für das spezifische UE durchgeführt wurde oder nicht, nachdem das Abladen in einer Radioebene angewendet wurde,
wobei der eNB die MME über mindestens ein detailliertes E-RABs benachrichtigt, das von dem 3GPP-LTE-Netz in das WLAN-Zugangsnetz verlagert wird.

## Revendications

1. Procédé de transmission d'une première indication dans un système de communication sans fil, le procédé étant exécuté par un noeud B évolué, eNB, de réseau de technologie d'évolution à long terme de projet de partenariat de troisième génération, 3GPP LTE, consistant à:
transmettre (S200), à une entité de gestion de mobilité, MME, la première indication indiquant si le eNB prend en charge un transfert de réseau local sans fil, WLAN, ou non;
recevoir (S201), en provenance de la MME, un message de requête de configuration de contexte initial,
dans lequel le message de requête de configuration de contexte initial comprend une seconde indication indiquant un support parmi i) tous les supports d'accès radio E-UTRAN, E-RAB, ii) un E-RAB spécifique parmi tous les E-RAB et iii) une partie des E-RAB parmi tous les E-RAB,
dans lequel la seconde indication est une indication pour le support parmi i) tous les E-RAB, ii) le E-RAB spécifique et iii) une partie des E-RAB d'un UE spécifique qui peut être transféré vers un réseau d'accès WLAN;
dès la réception de la seconde indication, effectuer (S202) le transfert pour l'UE spécifique vers le réseau d'accès WLAN conformément à la seconde indication; et
dans lequel la première indication est transmise par l'intermédiaire d'un message de transport de strate de non accès de liaison montante, NAS, qui est utilisé pour porter les informations NAS sur l'interface S1,
dans lequel la première indication est transmise avec un champ spécifique pour une indication de prise en charge de transfert de WLAN, avec un identifiant, ID, de WLAN supporté, et
dans lequel l'eNB signale en retour à la MME si le transfert est effectué pour l'UE spécifique ou non après application du transfert à un niveau de radio,
dans lequel l'eNB indique à la MME au moins un E-RAB détaillé qui est transféré du réseau 3GPP LTE au réseau d'accès WLAN.
